## Europäisches Patentamt
## European Patent Office
## Office européen des brevets

(11) Publication number: **0 140 846**
**B1**

(12) **EUROPEAN PATENT SPECIFICATION**

(45) Date of publication of patent specification: **23.11.88**

(21) Application number: **84830279.0**

(22) Date of filing: **16.10.84**

(51) Int. Cl.⁴: **B 29 B 17/00, B 29 B 7/42**

(54) Process for recovery of heterogeneous waste plastic materials, and apparatus usable in carrying out the same.

(30) Priority: **17.10.83 IT 6807083**
**13.09.84 IT 6791584**

(43) Date of publication of application:
**08.05.85 Bulletin 85/19**

(45) Publication of the grant of the patent:
**23.11.88 Bulletin 88/47**

(84) Designated Contracting States:
**AT BE CH DE FR GB IT LI LU NL SE**

(56) References cited:
**DE-A-2 351 328**
**DE-A-2 910 041**
**FR-A-2 193 685**
**FR-A-2 378 622**
**GB-A- 848 653**
**GB-A-2 019 299**
**US-A-3 486 194**
**US-A-3 652 064**
**US-A-3 795 468**

(73) Proprietor: **Fornasero, Renato**
**Via S. Pio V, 36**
**I-10125 Torino (IT)**

(72) Inventor: **Fornasero, Renato**
**Via S. Pio V, 36**
**I-10125 Torino (IT)**

(74) Representative: **Bosotti, Luciano et al**
**c/o Jacobacci-Casetta & Perani S.p.A. Via Alfieri, 17**
**I-10121 Torino (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention concerns the recovery of waste plastics material and relates, in particular, to a process for the recovery of waste plastics materials that are classifiable on the basis of their composition, as heterogeneous wastes. Such heterogeneous wastes are normally contained in solid urban and industrial refuse.

The re-use of waste plastics materials, in permitting recovery of basic raw materials which would otherwise be destroyed, is to be considered as generally remunerative by virtue of the high value of the recoverable materials. Moreover, it solves, in a particularly advantageous manner, the problem of disposing of waste materials which would otherwise be likely to contribute considerably to the pollution of the environment.

Well known and currently used processes for the recovery of waste plastics materials provide for the extrusion, blow-moulding and injection-moulding of the waste material.

Such processes as disclosed, for instance, in FR—A—2 378 622, DE—A—2351328, and US—A—3795468 are, however, in general applicable only to homogeneous wastes that is to say, wastes consisting of a single component only or else to wastes which, whilst not being entirely homogeneous, contain, in addition to a predominant component, negligible percentages of different components. The application of such processes to heterogeneous wastes, that is to say, waste plastics materials derived from a diversity of basic substances, has not up to now permitted the achievement of satisfactory results due to the occurrence of phenomena of incompatibility, of poor adherence or repulsion between the various components treated. Such phenomena cause the recovered products to have very inferior mechanical properties, such as to render impossible any further utilisation thereof.

The object of the present invention is to provide a process that permits the recovery or recycling of heterogeneous plastics waste and refuse materials, that is to say, plastics materials derived from basic substances or types or groups or families which differ from one another.

According to the present invention, such an object is achieved by a process for the recovery of heterogeneous mass of two or more waste plastics materials having the characteristics set forth in Claim 1.

Whilst having observed the fully repeatable nature of the process, the Applicant is not, for the moment, in a position to furnish precise indications regarding the chemico-physical mechanisms underlying the invention. Without any wish for conclusive adoption of any specific theory, it may be observed that the process according to the invention differs from the processes currently used for the recovery of (homogeneous) wastes of plastics materials, in that there is not generally envisaged any addition, to the wastes undergoing treatment, of chemical additives and of substances to ensure compatibility in mixing.

In particular, the Applicant has been able to observe that especially advantageous results can be achieved when the first and second heating stages are carried out without any substantial interruption between them, and when the said heating stages are carried out without rapid transitions of pressure and temperature, and with the application to the waste materials and to the plastified and melted masses obtained therefrom of substantially uniform mechanical stresses.

It has in fact been observed that the product subjected to the recovery process is susceptible to sudden pressure or temperature changes. Such changes are at the root of phenomena of creep which seriously prejudice the properties of the recovered product. It is moreover important to prevent the homogeneously melted mass from being subjected to significant mechanical forces or to significant pressure or temperature gradients.

It is furthermore noted that, in the present description and in the subsequent claims, the term "wastes" is understood as referring generally to heterogeneous mixtures of plastics materials howsoever produced in an industrial or a consumer context.

The present invention relates, furthermore, to apparatus for the mixing of plastics materials usable in carrying out the process of the invention, said apparatus having the characteristics set forth in Claim 13.

The apparatus according to the invention is characterised in that the said rotary element is provided, on at least one of its longitudinal portions, with thrust surfaces for the material which are discontinuous and arranged according to at least two oopositely directed helicoidal trajectories.

In other words, in at least one longitudinal section of the rotating element of the apparatus according to the invention, the thrust surfaces for the material are not constituted by one or more continuous helicoidal screw threads (as in the case of similar apparatus according to the prior art), but by angular sections of threads (blades) distributed in at least two groups, each of which comprises angular threaded sections orientated according to a common pitch, that is to say, in such a way as to exert a unidirectional thrust on the material undergoing treatment, through the effect of the rotation of the rotor.

The two groups of angular threaded sections therefore exert upon the material opposing thrusts which promote the thorough mixing and homogenizing of the said material.

Preferably the housing of the apparatus has associated appendages extending into the housing itself and capable of cooperating with the thrust surfaces of the rotor so as to effect a mixing action on the material to be treated.

In carrying out the waste plastics material processing previously described the apparatus according to the invention avoids subjecting the waste material to significant mechanical stresses, which could give rise to creep phenomena such as to render the recovered product effectively unusable.

The invention will now be described, purely by way of non-limiting example, with reference to the appended drawings, wherein:

Figure 1 is a partially cut away, longitudinal axial sectional view of apparatus for use in carrying out the process according to the invention;

Figure 2 is a schematic illustration, in an ideal flat plane development, of the arrangement of some of the elements illustrated in Figure 1, and

Figure 3 is a sectional view along the line III—III in Figure 1.

The description makes specific reference to the application of the invention for the recovery of waste plastics materials contained in solid urban refuse and in solid industrial refuse.

Solid urban refuse normally includes, in admixture with metal, glass, paper and organic composts derived from traditional household garbage, various types of plastics materials derived from packaging, such as bags, film, small baskets, trays and similar packaging products. Industrial plastics refuse is constituted by remnants or off-cuts resulting from the working processes or moulding, extrusion, rolling and blow-moulding carried out in industry, particularly in the packaging industries, the car-manufacturing industries and the electro-mechanical industries.

The plastics materials which are present, in different amounts, both in urban refuse and in industrial refuse are typically the following: high-density polyethylene (HDPE), low-density polyethylene (LDPE), polypropylene (PP), polyvinyl chloride (PVC), polystyrene (PS), acrylonitrile-butadiene-styrene/(ABS), polymethylmethacrylate (AM), polyester (PT), polyamide-(nylon) 6 (PA6), polyamide (nylon) 11 (PA11) and acetal resin (POM). Also frequently found in industrial wastes are polyurethane elastomer, polypropylene loaded with talc or various fibres, and polyamide (nylon) 66 loaded with glass fibres.

Even though the composition by weight of the wastes vary significantly from zone to zone, depending upon the particular commercial and industrial activities pursued in each, the distribution by weight of the plastics waste components is substantially as follows:

—polyethylene-polypropylene 60%,
—polystyrene 20%,
—polyvinyl chloride 15%, and
—other components 5%.

Whether in urban refuse or in industrial wastes polyolefins, polystyrene resins and vinyl resins, therefore, constitute the majority or prevalent component. Industrial refuse is distinguished essentially through the specific presence therein, as a minority or additional component, of polyamide resins, acetal resins and polyesters.

The recovery process proper is normally preceded by a preliminary operation for the separation of the plastics wastes from the other materials with which such wastes may have become mixed, for example, metal, glass, paper, organic composts and other garbage. The separation may be carried out by any known method: mechanical sorting with screening, separation using a magnetic system, compressed air jets, washing, centrifuging, drying, or flotation, or again separation on the basis of density. These are prior art techniques currently used at collection centres for urban cleaning services and for the disposal of industrial waste materials.

The recovery process is commenced with an initial stage of grinding (crushing), which reduces the waste materials to fragments having dimensions typically ranging from 2 to 4 mm. In the specific case in which the waste materials may comprise a significant quantity of thin rolled sections, it is advisable to proceed by compacting the rolled sections and then cutting them up.

Following or during the grinding stage, the wastes are subjected to a cold-mixing operation, designed to ensure a strictly uniform distribution of the fragments of the various waste materials contained within the mass of the ground materials.

The ground and mixed wastes are subsequently subjected to a heating operation, with a view to obtaining, from the mixture of the ground wastes, a homogeneous fluid mass.

For the heating of the waste, there are envisaged two successive stages carried out at different temperatures.

The first heating stage is carried out at a temperature typically within the range of 120°C to about 150°C. The objective in this first heating stage is to obtain, from the ground and mixed wastes, a mass that is found to be in an initial state of plastification. Preferably the material that is heated is also subjected to continuous mixing in such a way as to bring about the thorough and uniform dispersion of the various components of the waste material within the plastified mass.

The experiments conducted by the Applicant indicate that the temperatures to be considered as preferred during the first heating stage are those within the range from about 120°C to about 140°C for waste materials substantially consisting of polyolefine resins, polystyrene resins and vinyl resins, and temperatures within the range from about 130°C to about 150°C, for waste plastics materials in which, as well as a prevalent component consisting of one of the aforesaid resins there may be present an additional component specifically composed of polyamide resins, acetal resins and polyesters. In terms of an actual process the lower range of temperatures is to be considered as preferred for the treatment of waste plastics materials derived from urban refuse. The higher range of temperatures has, on the other hand, proved to be better suited for the treatment of wastes of plastics materials derived from industrial refuse.

The duration of this first heating stage does not, in itself, constitute a critical parameter, and it is, therefore, adaptable according to the quantity of material treated, the size of the processing plant used and the operating characteristics of the latter. Any pointless prolongation of the heating stage is generally to be avoided once the plastification of the processed mass has been achieved.

The plastified mass is subsequently subjected to a second heating stage at a temperature typically within the range of about 220°C to about 260°C.

This second heating stage is effected without any substantial discontinuity with regard to the preceding stage, thus preventing the plastified mass from being subjected to significant temperature gradients. For the second heating stage, the plastified mass may be maintained within the apparatus in which the first heating stage has been carried out, the operating temperature of the apparatus being gradually increased and the action of mixing the plastics material being continued throughout.

As in the first heating stage, it has been shown to be preferable to choose different temperature ranges for wastes substantially consisting of polyolefine, polystyrene and vinyl resins, and for wastes containing as an additional component polyamide, acetal and polyester resins.

For the first materials, what has, in fact, been found to be particularly advantageous is a choise of processing temperature within the range of about 220°C to about 240°C; for the others, the best results have, however, been obtained with processing temperatures within the range of about 240°C to about 260°C.

The objective in the second heating stage is to transform the plastified mass, obtained as from the first heating stage, into a melted mass of recovered plastics material which is largely homogeneous. Also the duration of the second heating stage is not, in itself, a critical parameters; this duration may, therefore, be adjusted according to the specific requirements for effecting the process.

During both the heating stages, in order to avoid the formation of combustion gases, it is necessary to prevent the treated material from being permitted, in the molten state, to incorporate or even simply to come into contact with air.

During the heating stages any rapid temperature or pressure transitions are equally to be avoided.

In the final stage of the process, the homogeneous melted mass of recovered plastics material may be subjected to various treatment operations such as, for example:

—casting into mould elements, such as shaping or moulding containers which permit, as the final direct result of the recovery process, the production of finished articles consisting of recovered plastics material;

—extrusion with a view to obtaining semifinished products such as bars or slabs; and

—the formation of granules usable for the completion of moulding or extrusion operations.

In the same way as in the preceding heating stages, it is, in any case, necessary to prevent the recovered plastics material from being subjected to marked thermal or mechanical stresses.

In particular during casting into mould elements, the molten mass is subjected to a compacting action, applying a light mechanical compression to the poured mass, for example, by means of a piston.

When the natural cooling of the cast mass proves incompatible with the requirements for a rapid recovery process, the material poured into the mould elements should be subjected to a controlled cooling. The casting operation and the ensuing cooling of the cast mass should be controlled in such a way as to permit the relaxation of the cast mass, that is to say, the gradual reduction of the tensions within the mass undergoing casting, the dimensions of which are maintained substantially constant. As is known, said reduction substantially results from the presence of viscous deformations within the mass itself.

The products obtained generally have mechanical and technical characteristics that are variable according to the composition of the waste material subjected to the recovery process. In every case, the products obtained through the process according to the invention have been shown to be entirely devoid of macroscopic defects (such as, for example, surface discontinuities) and have always exhibited good mechanical properties.

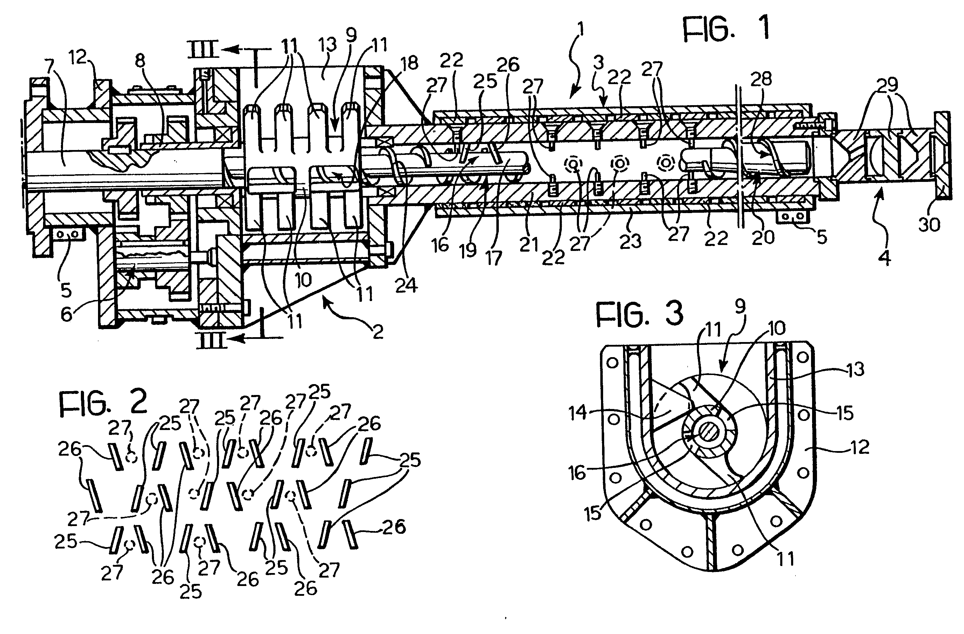

In Figure 1, there is generally indicated by reference numeral 1 apparatus for use advantageously for carrying out the process for recovering waste plastics materials previously described.

For simplicity of illustration the apparatus 1 may ideally be subdivided into three component units, that is to say:

—a grinding and cold-mixing unit 2,

—a hot-mixing and at least partial homogenisation unit 3, and

—a final homogenisation unit 4.

The apparatus 1 is provided with fixing elements, illustrated in the form of brackets 5, which permit the mounting thereof upon a base-frame or bed-plate, not shown in the drawings.

Upon this base-frame or bed-plate is mounted a motor such as an electric motor which drives, by means of a gear train generally indicated 6, a main shaft 7 rotatable about a horizontal axis.

A sleeve element 8 is mounted rotatably on the shaft 7, adjacent one end thereof, and drives a rotor 9 constituted by a tubular hub 10 from which project a plurality of radial teeth or fingers 11 positioned in an array (four in the example illustrated).

The sleeve 8 is also rotatably driven by the gears 6 which are designed (according to criteria in themselves widely known) in such a way as to permit the rotation of the shaft 7 and of the sleeve 8 at different speeds, selected from respective ranges of variation according to the requirements applicable thereto, and in opposite directions.

The gears 6 are housed within a robust metal casing 12, a part of which, indicated 13, has a generally channel section profile, open upwards, which extends so as to enclose the rotor 9.

The casing part 13 therefore defines with respect of the rotor 9 a mixing chamber into which there can be dropped the heterogeneous waste plastics materials which it is intended to subject to a recovery process.

The internal surface of the grinding chamber defined by the casing part 13 is provided with tooth-shaped or beak shaped projections 14 (Figure 3) which extend in a radial direction towards the rotor 9 in interpenetrating relation to the teeth 11 of said rotor.

The rotational trajectories described by the teeth 11 during the rotation of the rotor 9 hence pass through the spaces formed between the projections 14, thus performing a shredding and grinding action on the material that is introduced into the chamber in which the rotor 9 turns. The material thus ground also undergoes a thorough cold-mixing process through the effect of the driving action of the teeth 11 of the rotor.

At intermediate angular positions between the positions in which the teeth 11 extend apertures 15 are provided in the side of the hub 10 of the rotor 9 to permit the ground material to penetrate within the said hub 10.

A rotary element generally indicated 16 extends through the cavity of the hub 10.

In very broad terms, this element may be likened to a screw (scroll) of a standard screw extruder of which the core, indicated 17, constitutes a prolongation of the shaft 7 rotatably driven by the gears 6.

An end portion of the element 16, indicated 18, is extended, as previously indicated, within the hub 10 of the rotor 9.

The intermediate portion and the other end portion of the element 16, indicated respectively by numerals 19 and 20, are, on the other hand, extended within a tubular housing (pipe) 21 which projects from the casing 12 in a direction axially aligned with the shaft 7 and the core 17 of the element 16.

The wall of the housing 21 is made of material which is a good heat conductor, such as a metal, and it is encircled by a plurality of armoured electrical resistance heating elements 22 or similar heating elements (such as flow ducts for a diathermic oil), which permit the internal cavity of the housing 21 to be brought to predetermined temperature levels, which may be different in the various longitudinal portions of the said housing 21.

The electrical resistance heating elements 22 are enclosed within a further tubular casing of thermally insulating material 23 designed to contain the external dispersion of heat from the apparatus.

The first portion 18 of the element 16 has a configuration that is entirely comparable with that of standard screw or scroll extruders. In this portion, the core 17 is effectively encircled by a continuous helicoidal screw thread 24. This screw thread constitutes a thrust surface which, through the effect of the rotation of the core 17 driven by the shaft 7, imparts to the ground and cold-mixed material which penetrates within the hub 10 through the apertures 15 an ordered motion of progression towards the intermediate portion 19. During the progression towards this latter portion, the material arriving from the chamber in which the rotor 9 turns undergoes a further final mixing process.

The intermediate portion of the rotary element 16 differs substantially from the preceding portion 18 in that from the core 17 there extends a plurality of helicoidally developed blades 25, 26, which conform essentially to angular sectors of helicoidal screw threads.

In the intermediate section 19, the rotary element 16 is thus provided with thrust surfaces for the material which follow overall a helicoidal path like the screw thread 24: in contrast to the latter the blades 25, 26 have a discontinuous development, being angularly spaced apart.

Moreover, the blades 25, 26 are arranged in two groups or families according to the orientation of the pitch thereof.

In particular, as illustrated in Figure 2 (which represents the ideal development in a flat plane cut along a cylindrical surface surrounding the core 17 of the rotary element 16), the blades 25 constitute angular sections of one or more screw threads which wind around the core 17 in a direction reflecting that of the screw thread 24, whilst the blades 26 constitute angular sections of at least one other screw thread which winds around the core 17 in an opposite direction.

During the rotation of the element 16, the blades 25 therefore exert upon the material contained in the housing 21 a direct thrust in the direction which tends to move the material away from the first portion 18 (from left to right in Figure 1). At the same time the blades 26 exert upon the material a direct thrust in a direction that is exactly opposite (from right to left in Figure 1). The overall result obtainable is a thorough and intimate mixing of the material which is present within the tubular housing 21.

Since this housing is heated by the electrical heating elements 22, the ground material arriving from the rotor 9 gradually passes into the molten state.

In particular, when applying the recovery process to waste plastics material previously described, the portion of the housing 21 which faces towards the rotor 9 is maintained at temperatures in the order of 120°C to 150°C. In this portion of the housing 21 there is thus gradually formed a mass in an initial state of plastification.

Through the effect of the thrust action exerted by the first portion 18 of the element 16 upon the new material introduced into the housing 21 from the rotor 9, the said plastified mass passes subsequently into the portion of the housing 21 that is at furthest from the rotor 9. In this portion the temperatures are of the order of 220°C to 260°C, leading gradually to the formation of a homogeneously melted mass of recovered plastics material.

The heating of the material present within the housing 21 is carried out whilst this material is subjected to a continuous mixing action effected by the blades 25 and 26.

This mixing action does not, however, involve the application of significant mechanical stresses or of squashing and stirring forces such as would, however, arise in a mixing machine in which the screw thread 24 were also to be extended within the intermediate portion 19 of the element 16.

In order to render the mixing action more thorough, the internal surface of the housing 21 is provided with appendages 27 which project radially into this housing 21 in positions permitting them to penetrate between the blades 25, 26, as schematically illustrated by broken lines in the developed plan view of Figure 2.

In the example illustrated, and according to a solution currently preferred, the appendages 27 consist of rods which are cylindrical or have a transverse section of oval or a chamfered dihedral profile, and which are inserted in radial holes provided in the walls of the element 21.

The appendages 27 consist in fact of fixed inserts which cooperate with the blades 25 and 26 so as to improve the mixing action upon the plastified and melted product which advances within the housing 21.

The use of rods or of similar inserts (screws, etc.), inserted in radial holes provided in the housing 21 is shown to be advantageous since it affords the possibility of varying the number and the distribution of the appendages 27, according to the characteristics of the product undergoing treatment.

In order to take into account the characteristics of the various mixtures of materials treated it is also advantageous for the blades 25, 26 to be mounted upon the core 17 in such a way that it proves possible to orientate and remove them, thus also ensuring that it is possible to vary the pitch and the number thereof. A possible practical solution is found, to this end, in the mounting of the blades 25, 26 upon rings which may be splined onto the core 17 in various numbers and at various spacings according to the characteristics of the material treated.

The structure of the terminal portion 20 of the element 16 may be likened substantially to the structure of the terminal compression portions of standard screw or Archimedean screw extruders.

In this portion there is again a continuous helicoidal screw thread 28 winding around the core 17.

The core 17, however, has a tapered profile divering towards the outlet end of the housing 21. The angle of taper of the core is selected in relation to the rotational speed of the element 16, in such a way as to prevent excessive pressure gradients upon the homogeneously melted mass which is expelled from the housing 21.

At the outlet end of the housing 21 there is positioned a homogenization unit 4 consisting essentially of a static mixer (of known type) comprising further mixing elements 29 arranged in cascade. Each element 29 comprises a feed chamber of tetrahedral shape from which there emerge a number of ducts which come together, according to a generally cruciform arrangement in the tetrahedral chamber of the element 29 disposed downstream. These elements perform a fluid stream mixing action. At the outlet of the unit 4 there is disposed an extruder 30 which permits the formation, from the homogeneous melted mass issuing from the unit 4, of semifinished extrusions or granules ("chip") or products in the form of spaghetti, for feeding to other moulding machines.

**Claims**

1. A process for the recovery of a heterogeneous mass of two or more waste plastics materials, characterised in that it comprises the operations of:

—grinding said heterogeneous mass to produce fragments of said waste plastics materials;

—cold-mixing the ground mass to obtain therein a uniform distribution of the fragments of said waste plastics materials;

—subjecting the ground and mixed mass to a first heating stage at a first temperature to obtain a mass in an initial state of plastification; and

—subjecting said mass in an initial state of plastification to a second heating stage at a second temperature higher than said first temperature to obtain a homogeneous melted mass of recovered plastics material.

2. A process according to Claim 1, characterised in that it further comprises the operation of continuously mixing the mass of waste materials during said first and second heating stages.

3. A process according to Claim 1 or Claim 2, characterised in that said first and said second heating stages are carried out without rapid pressure and temperature transitions and with the application to the wastes and to the plastified and melted masses obtained therefrom of substantially uniform mechanical stresses.

4. A process according to any one of the Claims 1 to 3, characterised in that said first and second heating stages are carried out consecutively without any substantial interruption between them.

5. A process according to any one of the preceding claims, characterised in that said first and second heating stages are carried out in the absence of air.

6. A process according to any one of Claims 1 to 5, characterised in that said first heating stage is conducted at a temperature substantially within the range of about 120°C to about 150°C.

7. A process according to Claim 6, applied to waste plastics materials substantially consisting of polyolefine, polystyrene and vinyl resins, characterised in that said first heating stage is conducted at temperatures substantially within the range of about 120°C to about 140°C.

8. A process according to Claim 6, applied to waste plastics materials with a prevalent component of polyolefine, polystyrene and vinyl resins and an additional component of polyamide, acetal and polyester resins, characterised in that said first heating stage is conducted at temperatures substantially within the range of about 130°C to about 150°C.

9. A process according to any one of the preceding claims 1 to 8, characterised in that said second heating stage is conducted at temperatures substantially within the range of about 220°C to 260°C.

10. A process according to Claim 8, applied to waste plastics materials substantially consisting of polyolefine, polystyrene and vinyl resins, characterised in that said second heating stage is conducted at temperatures substantially within the range of about 220°C to about 240°C.

11. A process according to Claim 8, applied to waste plastics materials with a prevalent component of polyolefine, polystyrene and vinyl resins and an additional component of polyamide, acetalic and polyester resins, characterised in that said second heating stage is conducted at temperatures substantially within the range of about 240°C to about 260°C.

12. A process according to any one of the preceding claims, applied to the recovery of waste plastics materials contained in solid refuse, characterised in that it includes the preliminary operation of separating said wastes from the mass of solid refuse.

13. Apparatus for the mixing of plastics materials, usable in carrying out the process according to any one of the preceding Claims 1 to 12, characterised in that it includes:
—a generally tubular housing (21) fed at one end (2) with said ground and mixed mass,
—a rotary element (16) rotatably mounted within said housing (21) and provided with thrust surfaces for said mass having a helicoidal development (24, 25, 26, 28); said rotary element (16) being provided, on at least one of its longitudinal portions (19), with thrust surfaces (25, 26) for the material which are discontinuous and arranged according to at least two oppositely directed helicoidal trajectories, and
—heating means (22) for said tubular housing (21).

14. Apparatus according to Claim 13, characterised in that said discontinuous thrust surfaces (25, 26) are provided in the middle portion (19) of the rotary element (16).

15. Apparatus according to Claim 13 or Claim 14, characterised in that said thrust surfaces are in the form of blades (25, 26) of a helicoidal development.

16. Apparatus according to any one of Claims 13 to 15, characterised in that with said generally tubular housing (21) there are associated appendages (27) extending into the housing (21) itself and capable of cooperating with the said discontinuous thrust surfaces (25, 26) to effect a mixing action on the material to be treated.

17. Apparatus according to any one of Claims 13 to 16, characterised in that it further includes a device (2) for preliminarly grinding the plastics materials to be treated, in that said device (2) comprises a toothed rotor (9) provided with a tubular hub (10) fitted on the said rotary element (16) at one end (2) of the housing (21) and teeth (11) extending radially from the hub (10), and in that the wall of said hub (10) is provided with apertures (15) which permit the ground materials to penetrate radially into the hub (10) so as to be brought into contact with the thrust surface (24) of the rotary element (16).

18. Apparatus according to Claim 17, characterised in that said device (2) comprises a casing (13) in which said rotor (9) is rotatably mounted, and in that said casing (13) is provided with projections (14) extending towards the rotor (9) in interpenetrating relation to the teeth (11) of said rotor.

19. Apparatus according to Claim 13 and Claim 16, characterised in that it includes drive means (6) for imparting to the said rotary element (16) and to said rotor (9) rotational movements in opposite directions.

**Patentansprüche**

1. Verfahren zur Wiedergewinnung einer heterogenen Masse aus zwei oder mehr Kunststoffabfallmaterialien, dadurch gekennzeichnet, daß es die Arbeitsvorgänge aufweist:
—Zerkleinern der heterogenen Masse, um Brocken der Kunststoffabfallmaterialien zu erzeugen;
—Kaltmischen der zerkleinerten Masse, um darin eine gleichförmige Verteilung der Brocken der Kunststoffabfallmaterialien zu erhalten;
—Unterwerfen der zerkleinerten und gemischten Masse einer ersten Heizstufe bei einer ersten Temperatur, um eine Masse in einem Anfangsstadium der Plastifizierung zu erhalten, und
—Unterwerfen der Masse in einem Anfangsstadium der Plastifizierung einer zweiten Heizstufe bei einer zweiten Temperatur, die höher ist als die erste Temperatur, um eine homogene geschmolzene Masse des wiedergewonnenen Kunststoffmaterials zu erhalten.

2. Verfahren nach Anspruch 1, dadurch gekennzeichnet, daß es weiterhin den Arbeitsvorgang des kontinuierlichen Mischens der Masse der Abfallmaterialen während der ersten und zweiten Heizstufe aufweist.

3. Verfahren nach Anspruch 1 oder Anspruch 2, dadurch gekennzeichnet, daß die erste und zweite Heizstufe ohne schnelle Druck- und Temperaturübergänge und mit der Anwendung von im wesentlichen gleichförmigen mechanischen Kräften auf die Abfälle und auf die daraus erhaltenen plastifizierten und geschmolzenen Massen ausgeführt werden.

4. Verfahren nach einem der Ansprüche 1 bis 3, dadurch gekennzeichnet, daß die erste und zweite Heizstufe aufeinanderfolgend ohne eine wesentliche Unterbrechung zwischen ihnen ausgeführt werden.

5. Verfahren nach irgendeinem der vorhergehenden Ansprüche, dadurch gekennzeichnet, daß die erste und zweite Heizstufe in der Abwesenheit von Luft ausgeführt werden.

6. Verfahren nach irgendeinem der Ansprüche 1 bis 5, dadurch gekennzeichnet, daß die erste Heizstufe bei einer Temperatur im wesentlichen innerhalb des Bereichs von ungefähr 120°C bis ungefähr 150°C durchgeführt wird.

7. Verfahren nach Anspruch 6, das auf Plastikabfallmaterialien angewendet wird, die im wesentlichen Polyolefin-, Polystyrol- und Vinyl-Harze aufweisen, dadurch gekennzeichnet, daß die erste Heizstufe bei Temperaturen im wesentlichen innerhalb des Bereichs von ungerähr 120°C bis ungefähr 140°C durchgeführt wird.

8. Verfahren nach Anspruch 6, das auf Kunststoffabfallmaterialien mit einer überwiegenden Komponente von Polyolefin-, Polystyrol- und Vinyl-Harzen und einer zusätzlichen Komponente von Polyamid-, Acetal- und Polyester-Harzen angewendet wird, dadurch gekennzeichnet, daß die erste Heizstufe bei Temperaturen im wesentlichen innerhalb des Bereichs von ungefähr 130°C bis ungefähr 150°C durchgeführt wird.

9. Verfahren nach irgendeinem der vorhergehenden Ansprüche 1 bis 8, dadurch gekennzeichnet, daß die zweite Heizstufe bei Temperaturen im wesentlichen innerhalb des Bereichs von ungefähr 220°C bis 260°C durchgeführt wird.

10. Verfahren nach Anspruch 8, das auf Kunststoffmaterialien angewendet wird, die im wesentlichen Polyolefin-, Polystyrol- und Vinyl-Harze aufweisen, dadurch gekennzeichnet, daß die zweite Heizstufe bei Temperaturen im wesentlichen innerhalb des Bereichs von ungefähr 220°C bis ungefähr 240°C durchgeführt wird.

11. Verfahren nach Anspruch 8, das auf Kunststoffabfallmaterialien mit einer überwiegenden Komponente von Polyolefin-, Polystyrol- und Vinyl-Harzen und einer zusätzlichen Komponente von Polyamid-, acetalischen und Polyester-Harzen angewendet wird, dadurch gekennzeichnet, daß die zweite Heizstufe bei Temperaturen im wesentlichen innerhalb des Bereichs von ungefähr 240°C bis ungefähr 260°C durchgeführt wird.

12. Verfahren nach irgendeinem der vorhergehenden Ansprüche, das auf die Wiedergewinnung von Kunststoffabfallmaterialien angewendet wird, die in festem Müll enthalten sind, dadurch gekennzeichnet, daß es den vorangehenden Arbeitsvorgang des Trennens der Abfälle von der Masse des festen Mülls aufweist.

13. Vorrichtung zum Mischen von Kunststoffmaterialien, die zum Durchführen des Verfahrens nach irgendeinem der vorhergehenden Ansprüche 1 bis 12 verwendbar ist, dadurch gekennzeichnet, daß sie aufweist:

—ein im wesentlichen rohrförmiges Gehäuse (21), das an einem Ende (2) mit der zerkleinerten und gemischten Masse versorgt wird;

—ein rotierendes Element (16), das innerhalb des Gehäuses (21) drehbar montiert und mit Druckoberflächen für diese Masse, die eine spiralenförmige Abwicklung (24, 25, 26, 28) haben, versehen ist, wobei das rotierende Element (16) zumindest auf einem seiner Längsteile (19) mit Druckoberflächen (25, 26) für das Material versehen ist, die diskontinuierlich und entlang mindestens zweier entgegengesetzt gerichteter shcraubenlinienförmiger Trajektorien angeordnet sind; und

—eine Heizeinrichtung (22) für das rohrförmige Gehäuse (21).

14. Vorrichtung nach Anspruch 13, dadurch gekennzeichnet, daß die diskontinuierlichen Druckoberflächen (25, 26) in dem mittleren Teil (19) des rotierenden Elements (16) vorgesehen sind.

15. Vorrichtung nach Anspruch 13 oder nach Anspruch 14, dadurch gekennzeichnet, daß die Druckoberflächen in der Form von Blättern (25, 26) einer schraubenlinienförmigen Abwicklung sind.

16. Vorrichtung nach irgendeinem der Ansprüche 13 bis 15, dadurch gekennzeichnet, daß mit dem im wesentlichen rohrförmigen Gehäuse (21) Anhänge (27) verbunden sind, die in das Gehäuse (21) selbst ragen und in der Lage sind, mit den diskontinuierlichen Druckoberflächen (25, 26) zusammenzuwirken, um eine Mischungsvorgang mit dem zu behandelnde Material zu bewirken.

17. Vorrichtung nach irgendeinem der Ansprüche 13 bis 16, dadurch gekennzeichnet, daß sie weiterhin eine Einrichtung (2) für das vorhergehende Zerkleinern der zu behandelnden Kunststoffmaterialien aufweist, daß die Einrichtung (2) einen gezahnten Rotor (9), der mit einer rohrförmigen Nabe (10) versehen ist, die auf dem rotierenden Element (16) an einem Ende (2) des Gehäuses (21) montiert ist, und Zähne (11) aufweist, die sich radial von der Nabe (10) erstrekken, und daß die Wand der Nabe (10) mit Öffnungen (15) versehen ist, die den zerkleinerten Materialien erlauben, radial in die Nabe (10) einzudringen, so daß sie in Kontakt mit der Druckoberfläche (24) des rotierenden Elements (16) gebracht werden.

18. Vorrichtung nach Anspruch 17, dadurch gekennzeichnet, daß die Einrichtung (2) ein Gehäuse (13) aufweist, in dem der Rotor (9) drehbar montiert ist, und daß das Gehäuse (13) mit Vorsprüngen (14) versehen ist, die sich in Richtung auf den Rotor (9) in einander durchdringender Beziehung zu den Zähnen (11) des Rotors erstrecken.

19. Vorrichtung nach Anspruch 13 und Anspruch 16, dadurch gekennzeichnet, daß sie eine Antriebseinrichtung (6) aufweist, um dem rotierenden Element (16) und dem Rotor (9) Drehbewegungen in entgegengesetzten Richtungen mitzuteilen.

**Revendications**

1. Procédé pour recycler une masse hétérogène de deux ou d'un plus grand nombre de matières plastiques de rebut, caractérisé en ce qu'il inclut des opérations consistant à

—meuler ladite masse hétérogène de manière à former des fragments desdites matières plastiques de rebut;

—mélanger à froid la masse de base pour obtenir, dans cette dernière, une distribution uniforme des fragments desdites matières plastiques de rebut;

—soumettre la masse de base et la masse mélangée à une première étape de chauffage à une première température pour obtenir une masse située dans un état initial de plastification; et

—soumettre ladite masse située dans un état initial de plastification à une seconde étape de chauffage à une seconde température, supérieure à ladite première température pour obtenir une masse fondue homogène de matière plastique recyclée.

2. Procédé selon la revendication 1, caractérisé en ce qu'il inclut en outre l'opération consistant à mélanger de façon continue la masse des matières plastiques de rebut, pendant lesdites première et seconde étapes de chauffage.

3. Procédé selon la revendication 1 ou 2, caractérisé en ce que lesdites première et seconde étapes de chauffage sont exécutées dans mise en oeuvre de transitions rapides de la pression et de la température et avec l'application de contraintes mécaniques sensiblement uniformes aux matières de rebut et aux masses plastifiées fondues obtenues à partir de ces dernières.

4. Procédé selon l'une des revendications 1 à 3, caractérisé en ce que lesdites première et seconde étapes de chauffage sont exécutées consécutivement, sans aucune interruption substantielle entre elles.

5. Procédé selon l'une quelconque des revendications précédentes, caractérisé en ce que lesdites première et seconde étapes de chauffage sont exécutées en l'absence d'air.

6. Procédé selon l'une quelconque des revendications 1 à 5, caractérisé en ce que ladite première étape de chauffage est exécutée à une température située sensiblement dans la gamme comprise entre environ 120°C et environ 150°C.

7. Procédé selon la revendication 6, appliqué à des matières plastiques de rebut constituées essentiellement par une polyoléfine, du polystyrène et de résines de vinyle, caractérisé en ce que ladite première étape de chauffage est exécutée à une température située sensiblement dans la gamme comprise entre environ 120°C et environ 140°C.

8. Procédé selon la revendication 6, appliqué à des matières plastiques de rebut incluant un constituant principal formé d'une polyoléfine, de polstyrène et de résines de vinyle et un constituant additionnel formé de polyamide, d'acétal et de résines de polyester, caractérisé en ce que ladite première étape de chauffage est exécutée à des températures comprises sensiblement dans la gamme comprise entre environ 130°C et environ 150°C.

9. Procédé selon l'une quelconque des revendications précédentes, caractérisé en ce que ladite seconde étape de chauffage est exécutée à des températures situées sensiblement dans la gamme comprise entre environ 220°C et 260°C.

10. Procédé selon la revendication 8, appliqué à des matières plastiques de rebut constituées essentiellement par une polyoléfine, du polystyrène et de résines de vinyle, caractérisé en ce que ladite seconde étape de chauffage est exécutée à des températures situées sensiblement dans la gamme comprise entre environ 220°C et environ 240°C.

11. Procédé selon la revendication 8, appliqué à des matières plastiques de rebut incluant un constituant principal formé d'une polyoléfine, de polystyrène et de résines de vinyle et un constituant additionnel formé de polyamide, d'acétal et de résines de polyester, caractérisé en ce que ladite seconde étape de chauffage est exécutée à des températures situées sensiblement dans la gamme comprise entre environ 240°C et environ 260°C.

12. Procédé selon l'une quelconque des revendications précédentes, appliqué au recyclage de matières plastiques de rebut contenues dans des ordures solides, caractérisé en ce qu'il inclut l'opération préliminaire consistant à séparer lesdites matières de rebut de la masse des ordures solides.

13. Dispositif pour mélanger les matières plastiques, utilisable pour la mise en oeuvre du procédé selon l'une quelconque des revendications 1 à 12, caractérisé en ce qu'il inclut:

—un carter de forme générale tubulaire (21) alimenté, au niveau d'une extrémité (2), par ladite masse de base et ladite masse mélangée,

—un élémeno rotatif (16) monté de manière à pouvoir tourner dans ledit carter (21) et comportant des surfaces de poussée pour ladite masse, possédant une configuration hélicoîdale (24, 25, 26, 28); ledit élément rotatif (16) comportant, dans au moins l'une de ses parties longitudinales (19), des surfaces (25, 26) pour le matériau, qui sont discontinues et disposées conformément à au moins deux trajectoires hélicoîdales tournant en des sens opposés; et

—des moyens de chauffage (22) pour ledit carter tubulaire (21).

14. Dispositif selon la revendication 13, caractérisé en ce que lesdites surfaces discontinues de poussée (25, 26) sont prévues dans la partie médiane (19) de l'élément rotatif (16).

15. Dispositif selon la revendication 13 ou 14, caractérisé en ce que lesdites surfaces de poussée possèdent la forme de pales (25, 26), ayant une forme hélicoîdale.

16. Dispositif selon l'une quelconque des revendications 13 à 15, caractérisé en ce qu'audit carter de formé générale tubulaire (21) sont associés des doigts (27) pénétrant dans le carter (22) lui-même et aptes à coopérer avec lesdites surfaces discontinues de poussée (25, 26) de manière à appliquer une action de mélange au matériau devant être traité.

17. Dispositif selon l'une quelconque des revendications 13 à 16, caractérisé en ce qu'il comporte en outre un dispositif (2) servant à réaliser le broyage préliminaire des matières plastiques devant être traitées, en ce que ledit dispositif (2) comporte un rotor denté (9) comportant un moyeu tubulaire (10) monté sur ledit élément rotatif (16), au niveau d'une extrémité (2) du carter (21), et des dents (11) s'étendant radialement à partir du moyeu (10), et en ce que la paroi dudit moyeu (10) comporte des ouvertures (15) permettant aux matériaux broyés de pénétrer radialement dans le moyeu (10) de manière à être amenés en contact avec la surface de poussée (24) de l'élément rotatif (16).

18. Dispositif selon la revendication 17, caractérisé en ce que ledit dispositif (2) comporte un carter (13) dans lequel ledit rotor (9) est monté de manière à pouvoir tourner, et en ce que ledit carter (13) comporte des parties saillantes (14) s'étendant en direction du rotor (9) en étant imbriquées avec les dents (11) dudit rotor.

19. Dispositif selon les revendications 13 et 16, caractérisé en ce qu'il comporte des moyens d'entraînement (6) servant à appliquer audit élément rotatif (16) et audit rotor (9) des mouvements de rotation dans des sens opposés.

FIG. 1

FIG. 2

FIG. 3